# DEMANDE DE BREVET EUROPEEN

(11) **EP 1 523 187 A2**
(43) Date de publication de la demande: **13.04.2005**
(21) Numéro de dépôt: 04300633.7
(22) Date de dépôt: 28.09.2004
(51) Int. Cl.: H04N 7/16

(54) **Procédé de contrôle d'un parc de décodeurs**

(30) Priorité: 07.10.2003 FR 0350653
(71) Demandeur: SAGEM S.A., 75015 Paris (FR)
(72) Inventeur: PONS, Michel, 95290, L'ISLE-ADAM (FR)
(74) Mandataire: Camus, Olivier Jean-Claude

(57) **Abrégé**

La présente invention se rapporte à un procédé de contrôle d'un parc de décodeurs, qui incite très fortement les utilisateurs à mémoriser des mises à jour de logiciel de fonctionnement qui sont disponibles dans le flux de signaux émis par un opérateur de télévision. Dans l'invention, on prévoit de rendre impossible l'accès à certains services de télévision si la mise à jour du logiciel de fonctionnement n'a pas été mémorisée dans le décodeur. A cet effet, l'opérateur modifie le flux de signaux transmis (200) en changeant une valeur d'un paramètre de diffusion particulier (103) d'au moins un service de télévision ; seule la nouvelle version du logiciel de fonctionnement peut interpréter correctement la valeur modifiée et ainsi permettre de continuer à bénéficier du ou des services concernés. Dans un exemple avantageux du procédé selon l'invention, le paramètre de diffusion modifié est l'information de service type.

## Description

### DOMAINE TECHNIQUE DE L'INVENTION

La présente invention a pour objet un procédé de contrôle d'un parc de décodeurs. L'invention est plus particulièrement destinée au domaine de la télévision dite numérique, les signaux pour celle-ci pouvant être aussi bien transmis par un câble (dans des bandes de fréquence à l'émission de 110 à 862 MHz), par un satellite (dans des bandes de fréquence à l'émission de 10,3 à 12,8 GHz), ou par voie terrestre (dans des bandes de fréquence à l'émission de 17 à 862 MHz). Le but de l'invention est, d'une part, de permettre à un opérateur de télévision numérique de s'assurer que les décodeurs utilisés pour recevoir un bouquet de services de télévision ne sont pas des décodeurs dits pirates, et que, d'autre part, les abonnés mettent à jour régulièrement un logiciel permettant aux décodeurs de fonctionner en proposant un ensemble d'offres rendues disponibles par l'opérateur de télévision.

D'une façon générale, le domaine de l'invention est celui de la télévision numérique. Dans ce domaine, des décodeurs de télévision numérique sont utilisés, notamment afin d'accéder à un ensemble de chaînes de télévision cryptées. Les décodeurs de télévision sont des organes interfaces entre des systèmes de transmission de signaux de télévision, notamment de signaux de télévision numérique au format MPEG et DVB, et des moniteurs de visualisation. Les signaux échangés sont le plus souvent des signaux numériques, mais un décodeur peut aussi avoir des facultés de traitement de signaux analogiques. Les moyens de transmission qui transmettent les émissions de télévision à ces décodeurs/récepteurs sont soit des moyens de transmission aériens classiques, soit des câbles coaxiaux, voire optiques, soit des satellites de réémission qui desservent une région.

Typiquement un ensemble récepteur de télévision numérique comporte un décodeur relié par ailleurs à un dispositif de visualisation. Le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue différents types de tables : Il existe notamment les tables dites PSI, Program Specific Information - Information Spécifique de Programme -, décrites dans la norme MPEG, qui sont des tables fonctionnelles d'identification de paquets vidéo/audio ou de données. Elles sont fondamentales car elles représentent en définitive le protocole de transmission et l'architecture des paquets numériques transmis ainsi que leur signification. Les tables PSI servent à afficher les images d'un programme visualisé.

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets ou, dans certains cas, 4096 octets. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas à priori comment sont répartis les paquets de données mais il peut reconnaître un découpage des sections. Le décodeur lit donc l'identifiant dans chaque section et réorganise les données pour les affecter aux bonnes tables. Toutes les tables sont éditées par les opérateurs de télévision ou les gestionnaires de média de transport, sont incorporées dans le flux de cet opérateur, et sont acheminées vers les utilisateurs par les différents médias.

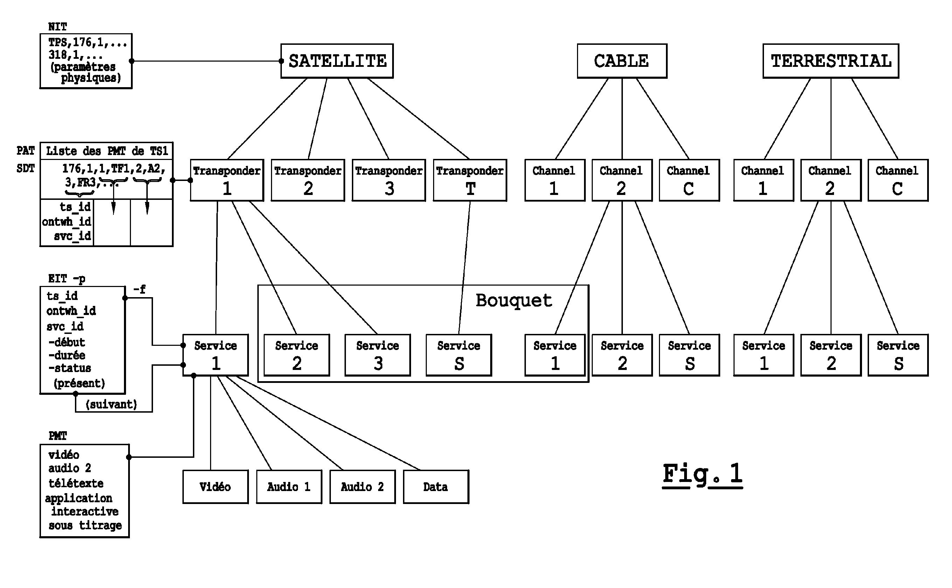

La figure 1 montre une représentation des différents médias de transmission. Elle permet par ailleurs de figer le vocabulaire utilisé dans le domaine. Des moyens d'émission réception comportant des satellites, des câbles ou des dispositifs de rediffusion terrestre constituent des réseaux de transmission. Pour chaque média de transmission il existe une table NIT, Network Information Table - Table d'Information de Réseau-, qui indique le nom du réseau, le numéro du réseau, et quand il s'agit de liaison par satellite, pour chacun des multiplexes du réseau, qui sont dans ce cas des transpondeurs, des paramètres physiques tels que la fréquence de la porteuse, la position orbitale, la polarisation, etc... Des informations similaires sont contenues dans les tables NIT des médias de transmission câble ou terrestre.

Les informations contenues dans les tables NIT sont des paramètres physiques permettant notamment à un décodeur de se caler en fréquence pour capter chaque flux de signaux multiplexés, et pour chaque fréquence, d'obtenir des informations techniques telles que le débit symbole, le taux de codage, le taux de modulation.... Chaque table NIT comporte, pour un transpondeur désigné, une liste de services véhiculés par le transpondeur. Par service on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres.

Chaque service est déclaré dans la table NIT avec les informations suivantes :
- une information dite Original Network Id (ontwk_id) - Identification de réseau origine.
- une information dite Transport Stream Id (ts_id) - Identification de multiplex ; cette information désigne typiquement un des transpondeurs . une information dite Service Id (svc_id) - Identification du service dans le multiplex.
- une information dite Service Type -, qui sera en pratique un numéro attribué par un opérateur qui gère la transmission de ce service. Par défaut, un même numéro est attribué aux services d'un même type, les différents types de services pouvant être :
   - des services de télévision analogique ;
   - des services de télévision numérique ;
   - des services interactifs ;
   - des services radio ;
   - ...

Dans le message correspondant à la table NIT le décodeur récupère essentiellement les paramètres physiques des transpondeurs ainsi que la description minimale des services.

Chaque transpondeur diffuse une table SDT qui comporte des sous-tables. Chaque sous-table décrit un service véhiculé par le transpondeur. Outre les informations de Transport Stream Id, Original Network Id, Service Id et Service Type déjà décrites dans la NIT, la sous-table SDT associée au service contient :
- une information dite Service Name (svc_name) - information donnant le nom du service,
- une information dite EIT flag - information indiquant la présence de tables EIT pour ce service,
- une information dite Fre CA mode - information indiquant si le service est diffusé en clair ou crypté.
- Une information dite Running Status - information indiquant l'état courant du service (en cours, arrêté, prêt à démarrer, etc ...)

Les services déclarés dans la SDT peuvent faire partie des servicesdiffusés par le transpondeur considéré ou par un autre transpondeur. Ceci est identifié par une information de la SDT.

En définitive, toute une architecture de tables est ainsi distribuée, en particulier selon la norme EN 300 468 et le but du décodeur est de reconstruire toutes les tables pour disposer des informations de réglage ainsi que des informations à montrer en visualisation pour les utilisateurs.

En ce qui concerne les transpondeurs, chacun diffuse en outre une table dite PAT, Program Association Table- Table des programmes associés -, table qui elle-même donne la liste des tables PMT, Program Map Table - Table des composants des programmes -, qui sont associées aux services.

Au niveau des services, on trouvera des tables dites EIT Event Information Table - Table d'événements, et des tables PMT. Les tables EIT se réfèrent à chaque service, à partir de son triplet d'identification selon la norme DVB, et indiquent pour ce service l'heure de début, la durée ou l'heure de fin, le statut, ainsi que d'autres informations relatives à un programme diffusé. Les tables EIT sont par ailleurs dédoublées en EITp et EITf pour représenter une table correspondant à l'instant présent (p), et ainsi qu'une autre table correspondant à un instant suivant (f, following). Les deux tables EITp et EITf sont de même structure mais possèdent chacune un identifiant renseignant sur leur qualité.

En pratique, les différentes tables sont transmises, dans le flux des sections de paquets, par morceaux répartis dans le temps, les uns à la suite des autres, selon les normes.

Chaque opérateur diffuse donc une signalisation plus ou moins complète permettant la constitution d'une liste de services accessibles à partir d'une connexion unique sur un transpondeur. Dans ce cadre, les paramètres de connexion sont soit saisis par l'utilisateur, à l'écran, soit figés dans le décodeur. Afin de permettre à un utilisateur de récupérer une liste complète de tous les services diffusés sur tous les réseaux indépendamment de leur opérateur, un balayage (dit aussi scanning) peut être utilisé. Il se traduit par une succession de visites de transpondeurs permettant de récupérer des services de plusieurs réseaux, et non plus d'une installation unique.

Outre des informations destinées à constituer les différentes tables du décodeur, les opérateurs de télévision ont également la possibilité de transmettre, de façon multiplexée avec les informations audio, vidéo ou encore constitutives de tables qu'ils émettent dans le flux de signaux, des données dites de mise à jour de logiciel. En effet, chaque décodeur de télévision numérique possède dans sa mémoire, un logiciel de fonctionnement dont les tâches sont multiples : le logiciel de fonctionnement sert notamment à contrôler un ensemble de prestations proposées par l'opérateur, telles que l'accès à des sous-titrages multilingues, l'accès à différentes bandes audio pour un service de télévision donné, la gestion des services interactifs, le contrôle parental, l'établissement de listes préférées d'un utilisateur du décodeur... Ces mises à jour de logiciel peuvent également être désignées comme des nouvelles applications logicielles, ou nouveau logiciel, de fonctionnement du décodeur.

### ARRIERE-PLAN TECHNOLOGIQUE DE L'INVENTION

La possibilité de mettre à jour le logiciel revêt une importance particulière pour différentes raisons : tout d'abord, les opérateurs de télévision sont intéressés de faire évoluer en permanence les prestations qu'ils proposent à leurs abonnés ; ils y voient un intérêt commercial important, et les abonnés, pour leur part, peuvent ainsi disposer d'un décodeur apte à satisfaire de plus en plus de besoins (banque à distance, messagerie électronique...). Ensuite, les mises à jour de logiciel permettent d'apporter au logiciel de fonctionnement du décodeur de nouvelles mesures de sécurité, d'authentification, qui permettent de s'assurer que le décodeur utilisé n'est pas un décodeur pirate. Enfin, les mises à jour de logiciel permettent de corriger certains dysfonctionnements qui apparaîtraient au fil du temps ; les fabricants de décodeurs peuvent ainsi fournir relativement rapidement des décodeurs équipés d'un premier logiciel de fonctionnement, et le rectifier par la suite.

Tant pour l'opérateur de télévision que pour l'utilisateur possédant un décodeur licitement utilisé, il est donc intéressant d'installer des mises à jour du logiciel de fonctionnement du décodeur. Cependant, on constate qu'une part significative des utilisateurs ne mettent pas à jour le logiciel de fonctionnement. Plusieurs raisons expliquent ce constat : tout d'abord, les utilisateurs de décodeurs pirates n'ont aucun intérêt à télécharger un nouveau logiciel de fonctionnement sous peine de voir leur mécanisme de piratage déjoué par le nouveau logiciel de fonctionnement. Ensuite, certains utilisateurs ne mettent jamais leur décodeur dans un état permettant la mise à jour du logiciel. Enfin, et surtout, les opérateurs de télévision ne pratiquent pas automatiquement le téléchargement, la mémorisation, des nouveaux logiciels de fonctionnement, notamment pour des raisons légales dans certains pays.

Avec un nombre de décodeurs toujours plus important qui n'est pas mis à jour au niveau du logiciel de fonctionnement, l'opérateur de télévision perd ainsi peu à peu le contrôle de son parc de décodeurs, dans la mesure où il développe de nouvelles prestations, de nouveaux systèmes de sécurité qui ne sont pas mis en oeuvre, limitant en conséquence les retombées commerciales escomptées.

### DESCRIPTION GENERALE DE L'INVENTION

La présente invention permet de pallier l'ensemble des problèmes qui viennent d'être décrits. En effet, la présente invention consiste en un procédé de contrôle, par un opérateur de télévision, d'un parc de décodeurs, qui incite très fortement les utilisateurs à mémoriser des mises à jour de logiciel de fonctionnement qui sont disponibles dans le flux de signaux émis par l'opérateur. Pour ce faire, dans l'invention, on prévoit de rendre impossible l'accès à certains services de télévision si la mise à jour du logiciel de fonctionnement n'a pas été mémorisée dans le décodeur. A cet effet, l'opérateur de télévision modifie le flux de signaux transmis en changeant une valeur d'un paramètre de diffusion particulier, par exemple un paramètre physique ou de diffusion, d'au moins un service de télévision ; seule la nouvelle version du logiciel de fonctionnement peut interpréter correctement la valeur modifiée et ainsi permettre de continuer à bénéficier du ou des services concernés. Dans un exemple avantageux du procédé selon l'invention, le paramètre de diffusion modifié est l'information de service type précédemment mentionnée.

L'invention concerne donc essentiellement un procédé de contrôle d'un ensemble de décodeurs par un opérateur de télévision caractérisé en ce qu'il comporte les différentes étapes consistant à:
- émettre, depuis un opérateur de télévision vers un décodeur, un flux de signaux comportant notamment un ensemble d'informations spécifiques, interprétables par le décodeur comme étant constitutives d'une nouvelle application logicielle destinée à être téléchargée dans le décodeur;
- proposer à un utilisateur du décodeur de télévision de mémoriser la nouvelle application logicielle;
- modifier, dans le flux de signaux, un paramètre particulier de diffusion d'au moins un service de télévision pour que le paramètre particulier passe d'une valeur par défaut à une valeur distinctive, ladite valeur distinctive étant interprétable uniquement au moyen de la nouvelle application logicielle.

Outre les caractéristiques principales de l'invention qui viennent d'être mentionnées dans le paragraphe précédent, le procédé selon l'invention peut comporter une ou plusieurs caractéristiques supplémentaires parmi les suivantes:
- le paramètre particulier modifié est un paramètre d'identification de type de services.
- l'étape de modification du paramètre de diffusion est progressivement appliquée à plusieurs services de télévision.
- la progression de l'application de la modification du paramètre de diffusion est effectuée sur des services de télévision appartenant à une même famille.
- la progression de l'application de la modification du paramètre de diffusion est effectuée sur des services de télévision ayant la même valeur par défaut du paramètre particulier.
- la progression de l'application de la modification du paramètre de diffusion est effectuée sur l'ensemble des types de services, à l'exception d'un service de télévision dit service d'information indiquant à l'utilisateur du décodeur une procédure à suivre pour mémoriser la nouvelle application logicielle.
- la nouvelle application logicielle est une mise à jour d'une ancienne application logicielle déjà présente dans le décodeur de télévision.
- les valeurs par défaut des paramètres particuliers sont interprétables au moyen de la nouvelle application logicielle.
- le procédé comporte l'étape supplémentaire consistant à, après l'écoulement d'une durée à l'appréciation du diffuseur suivant l'émission de l'ensemble d'informations spécifiques constitutives de la nouvelle application logicielle destinée à être téléchargée dans le décodeur, modifier de nouveau, dans le flux de signaux, le paramètre particulier de diffusion des services de télévision pour lesquels ledit paramètre particulier a été précédemment modifié, pour que le paramètre particulier passe de la valeur distinctive à la valeur par défaut.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une architecture de distribution des informations à acquérir par le décodeur ;
- à la figure 2, une illustration schématique d'un exemple de mise en oeuvre du procédé selon l'invention ;
- à la figure 3, un exemple de modification d'un paramètre de diffusion particulier intervenant dans la mise en oeuvre du procédé selon l'invention.

### DESCRIPTION DES FORMES DE REALISATION PREFEREES DE L'INVENTION

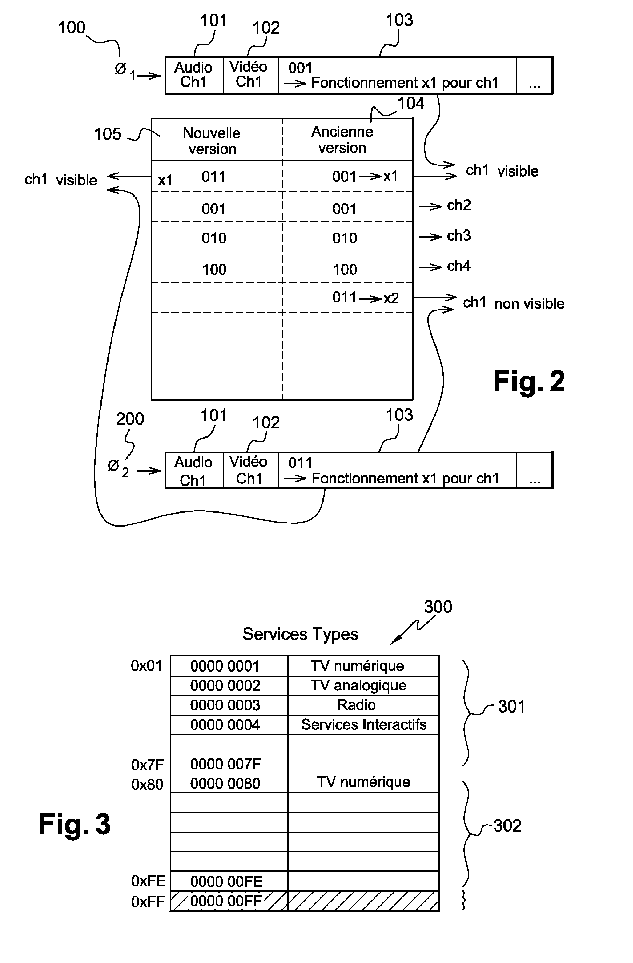

La figure 2 montre un premier flux 100 de signaux multiplexés émis par un opérateur de télévision. Le premier flux comporte par exemple une composante audio 101 d'un premier service de télévision ch1, une composante vidéo 102 du premier service de télévision ch1, et une information de données 103, correspondant à un paramètre de diffusion du premier service de télévision ch1, et destiné à être incorporé dans une des tables de formatage précédemment décrites. Dans l'exemple décrit, le paramètre de diffusion possède une première valeur 001, qui correspond, dans une utilisation usuelle, c'est à dire avec une ancienne version 104 du logiciel de fonctionnement du décodeur, à un premier mode de fonctionnement X1 du décodeur de télévision. Par mode de fonctionnement, on désigne un réglage prédéfini, relatif au paramètre de diffusion, par exemple, en fonction de la nature du paramètre de diffusion considéré, en terme de fréquence, de débit symbole, de taux de codage, de taux de modulation, de type de services... selon lequel le décodeur va fonctionner pour extraire de façon satisfaisante les informations relatives au(x) service(s) concerné(s) par le paramètre de diffusion.

D'autres services de télévision, ch2, ch3, ch4, peuvent être associés à des valeurs similaires du paramètre de diffusion considéré, ou à d'autres valeurs de ce paramètre. Si l'opérateur de télévision émet le premier flux 100, l'utilisateur ne rencontre aucune difficulté à obtenir le premier service ch1. Par contre, si l'opérateur de télévision émet un deuxième flux 200, comportant, tout comme dans le premier flux 100 la composante audio 101 du premier service de télévision ch1, la composante vidéo 102 du premier service de télévision ch1, mais où la valeur l'information de données 103 a été modifiée pour prendre une deuxième valeur , par exemple la valeur 011, correspondant toujours au même paramètre de diffusion du premier service de télévision ch1., deux cas de figure peuvent se présenter :
- soit l'utilisateur n'a pas mémorisé une nouvelle version 105 du logiciel de fonctionnement, et la deuxième valeur 011 correspond alors soit, comme c'est le cas sur la figure 2, à un deuxième mode de fonctionnement X2 du décodeur de télévision, qui n'est pas le mode de fonctionnement prévu pour obtenir le premier service ch1, soit à un mode de fonctionnement qui n'est pas reconnu par l'ancienne version du logiciel de fonctionnement. Le premier service de télévision ne pourra alors pas être obtenu.
- soit l'utilisateur a mémorisé, lors d'une proposition de mémorisation qui lui a été préalablement soumise, la nouvelle version 105 du logiciel de fonctionnement, et la deuxième valeur 011 correspond alors effectivement au premier mode de fonctionnement X1 ; le premier service de télévision pourra alors être obtenu.

En d'autres termes, la nouvelle version du logiciel de fonctionnement offre une table de correspondance entre des nouvelles valeurs de paramètres de diffusion émises dans le flux de signaux par l'opérateur, et des modes de fonctionnement qui existaient auparavant, mais qui étaient associés à d'autres valeurs. Dans un mode de mise en oeuvre particulier du procédé selon l'invention, on conserve l'association entre des valeurs par défaut du paramètre de diffusion et un mode de fonctionnement particulier, association reconnue par l'ancienne version du logiciel de fonctionnement, et on propose une ou plusieurs valeurs supplémentaires du paramètre de diffusion que va modifier l'opérateur dans le deuxième flux de signaux, ces valeurs supplémentaires étant associées au même mode de fonctionnement particulier, chacune des valeurs supplémentaires étant reconnue correctement par une des mises à jour proposées ultérieurement.

Le fait de conserver l'association initiale entre les valeurs par défaut du paramètre de diffusion et un mode de fonctionnement particulier permet à l'opérateur de télévision de modifier un paramètre de diffusion pour un ou plusieurs services de télévision particuliers, qui ne pourront être alors correctement restitués qu'au moyen de la nouvelle version 105 du logiciel de fonctionnement, tout en n'affectant pas d'autres services fonctionnant avec la valeur par défaut du paramètre de diffusion modifié.

La modification d'un paramètre de diffusion est décidée par l'opérateur de télévision ; il effectue ces modifications au rythme qu'il le souhaite, sur les services qu'il souhaite. Il peut ainsi commencer par modifier le paramètre de diffusion pour uniquement un service de télévision ; puis étendre cette modification à tous les services de télévision possédant une même valeur par défaut du paramètre de diffusion visé par la modification, ou à tous les services de télévision d'une même famille, une famille de services correspondant à un ensemble de services ayant un thème principal commun (chaînes cinéma, chaînes sportives, chaînes d'information, services interactifs....). Ainsi, plus le temps passe, plus la liste de services disponibles est limitée pour l'utilisateur qui ne mémorise pas la nouvelle version de l'application logicielle de fonctionnement. L'opérateur peut envisager de supprimer ainsi, aux utilisateurs récalcitrants, l'ensemble des services de télévision auxquels ils avaient initialement accès, à l'exception d'un service leur expliquant la démarche à suivre pour mettre à jour leur logiciel de fonctionnement, et éventuellement à l'exception de services de télévision pour lesquels des législations nationales interdiraient le blocage.

Dans une mise en oeuvre particulière du procédé selon l'invention, on propose de modifier le paramètre de diffusion appelé service type, que l'on trouve d'une part dans les tables NIT et d'autre part dans les tables SDT. L'avantage d'utiliser ce paramètre de diffusion plutôt que le paramètre de débit (ou taux de codage), la table de fréquence ou le taux de modulation est qu'il permet une véritable sélection des services que l'opérateur va rendre petit à petit indisponibles pour les utilisateurs n'ayant pas mémorisés la nouvelle version du logiciel de fonctionnement, sans pour autant que l'utilisateur croit à un dysfonctionnement de son décodeur.

En effet, une modification des autres paramètres de diffusion dans le flux de signaux entraîne, en l'absence de la nouvelle version du logiciel de fonctionnement, soit un blocage d'une ensemble de services de télévision (typiquement lorsque l'on modifie la table de fréquence prévue par défaut), soit l'apparition, lorsqu'un service sélectionné a fait l'objet d'une modification du paramètre de diffusion de type taux de modulation, d'un message d'erreur. Par contre, en modifiant le paramètre de service type, qui est nécessairement associé à chaque service de télévision, et en affectant des nouvelles valeurs qui ne correspondent pas à des valeurs par défaut de ce paramètre de diffusion, l'ancienne version du logiciel de fonctionnement ne retiendra pas les valeurs qui lui sont inconnues et ne proposera tout simplement plus le ou les services concernés.

L'organisation du paramètre de services types, dont les valeurs sont disponibles dans les tables NIT et les tables SDT, est représentée à la figure 3. Sur cette figure, on constate que les services types, organisés dans un tableau 300, sont codés sur 1 octet. Les valeurs 0x01 à 0x7F constituent un premier ensemble 301 de services types qui sont réservés aux services types standardisés. Ce sont les valeurs dites standard des services types. On y trouve les valeurs par défaut des services types, avec notamment une valeur pour les services de télévision numérique, une valeur pour les services de télévision analogiques, une valeur pour les services radio, une valeur pour les services interactifs... Les correspondances entre les valeurs standard et un service type particulier, et donc un mode de fonctionnement prédéterminé du décodeur, sont imposées par la norme, et ne peuvent donc pas faire l'objet de modifications de la part des opérateurs de télévision.

La valeur 0xFF est une valeur interdite. Les valeurs 0x80 à 0xFE constituent un deuxième ensemble 302 de services types. Ce sont les valeurs dites privées des services types. Leur utilisation est laissée libre à l'opérateur, qui peut donc définir des correspondances entre ces valeurs de paramètre diffusées dans le flux et le service type auquel elles correspondent. De telles correspondances peuvent ainsi être définies dans les mises à jour des logiciels de fonctionnement. La présence permanente des valeurs standards garantit une grande souplesse dans la progressivité des suppressions des services de télévision disponibles sans mise à jour du logiciel de fonctionnement.

Les principaux intérêts d'un tel exemple de mise en oeuvre sont donc les suivants :
- pour l'ensemble des services d'un même type, l'opérateur de télévision peut à sa convenance déclarer une partie de ces services avec la valeur standard, et l'autre partie avec la valeur privée : il n'y a aucune contrainte liée au procédé selon l'invention.
- à tout moment, l'opérateur peut échanger la valeur du service type diffusée : le procédé selon l'invention est indéfiniment réversible et le décodeur réagit au contenu diffusé.
- le procédé est extensible à plus de deux valeurs par service type. On peut imaginer, pour des besoins particuliers, une table de valeurs associée à un unique service type.

A tout moment, l'opérateur peut revenir à la valeur standard s'il le désire ou même passer à une 2^{ème} ou 3^{ème} valeur distincte. La possibilité de revenir à la valeur par défaut a un caractère sécurisant pour l'opérateur au cas où, par exemple, il y aurait des problèmes de diffusion de la nouvelle application, problèmes de type, par exemple, pannes d'équipements de diffusion sur certaines régions.

## Revendications

1. Procédé de contrôle d'un ensemble de décodeurs par un opérateur de télévision **caractérisé en ce qu'**il comporte les différentes étapes consistant à :
- émettre, depuis un opérateur de télévision vers un décodeur, un flux (200) de signaux comportant notamment un ensemble d'informations spécifiques, interprétables par le décodeur comme étant constitutives d'une nouvelle application logicielle destinée à être téléchargée dans le décodeur;
- proposer à un utilisateur du décodeur de télévision de mémoriser la nouvelle application logicielle;
- modifier, dans le flux de signaux, un paramètre particulier (103) de diffusion d'au moins un service de télévision pour que le paramètre particulier (103) passe d'une valeur par défaut à une valeur distinctive, ladite valeur distinctive étant interprétable uniquement au moyen de la nouvelle application logicielle.

2. Procédé de contrôle d'un ensemble de décodeurs selon la revendication précédente **caractérisé en ce que** le paramètre particulier modifié (103) est un paramètre d'identification de type de services.

3. Procédé de contrôle d'un ensemble de décodeurs selon l'une au moins des revendications précédentes **caractérisé en ce que** l'étape de modification du paramètre de diffusion est progressivement appliquée à plusieurs services de télévision.

4. Procédé de contrôle d'un ensemble de décodeurs selon la revendication précédente **caractérisé en ce que** la progression de l'application de la modification du paramètre de diffusion est effectuée sur des services de télévision appartenant à une même famille.

5. Procédé de contrôle d'un ensemble de décodeurs selon l'une au moins des revendications 3 ou 4 **caractérisé en ce que** la progression de l'application de la modification du paramètre de diffusion est effectuée sur des services de télévision ayant la même valeur par défaut du paramètre particulier.

6. Procédé de contrôle d'un ensemble de décodeurs selon l'une au moins des revendications 3 ou 4 et la revendication 2 **caractérisé en ce que** la progression de l'application de la modification du paramètre de diffusion est effectuée sur l'ensemble des types de services à l'exception d'un service dit service d'information indiquant à l'utilisateur du décodeur une procédure à suivre pour mémoriser la nouvelle application logicielle.

7. Procédé de contrôle d'un ensemble de décodeurs selon l'une au moins des revendications précédentes **caractérisé en ce que** la nouvelle application logicielle est une mise à jour d'une ancienne application logicielle déjà présente dans le décodeur de télévision.

8. Procédé de contrôle d'un ensemble de décodeurs selon l'une au moins des revendications précédentes **caractérisé en ce que** les valeurs par défaut des paramètres particuliers sont interprétables au moyen de la nouvelle application logicielle.

9. Procédé de contrôle d'un ensemble de décodeurs selon l'une au moins des revendications précédentes **caractérisé en ce qu'**il comporte l'étape supplémentaire consistant à, après l'écoulement d'une durée suivant l'émission de l'ensemble d'informations spécifiques constitutives de la nouvelle application logicielle destinée à être téléchargée dans le décodeur, modifier de nouveau, dans le flux de signaux, le paramètre particulier de diffusion des services de télévision pour lesquels ledit paramètre particulier a été précédemment modifié, pour que le paramètre particulier passe de la valeur distinctive à la valeur par défaut.
